# EUROPÄISCHE PATENTSCHRIFT

(11) **EP 0 895 628 B1**
(45) Veröffentlichungstag und Bekanntmachung des Hinweises auf die Patenterteilung: **08.03.2000**
(21) Anmeldenummer: 97918145.0
(22) Anmeldetag: 17.04.1997
(51) Int. Cl.: G06K 19/077

(54) **DATENTRÄGERKARTE**
DATA CARRIER CARD
CARTE SUPPORT DE DONNEES

(30) Priorität: 22.04.1996 DE 19615980
(43) Veröffentlichungstag der Anmeldung: 10.02.1999
(73) Patentinhaber: SIEMENS AKTIENGESELLSCHAFT, 80333 München (DE); FRAUNHOFER-GESELLSCHAFT ZUR FÖRDERUNG DER ANGEWANDTEN FORSCHUNG E.V., 80636 München (DE)
(72) Erfinder: STOLL, Frank, D-08340 Schwarzenberg (DE); PÖHLAU, Frank, D-90482 Nürnberg (DE)
(74) Vertreter: Zedlitz, Peter
(86) Internationale Anmeldenummer: EP9701938
(87) Internationale Veröffentlichungsnummer: WO9740470

(56) Entgegenhaltungen:
- EP-A- 0 350 235
- FR-A- 2 595 847
- PATENT ABSTRACTS OF JAPAN vol. 010, no. 338 (P-516), 15.November 1986 & JP 61 139894 A (MATSUSHITA ELECTRIC IND CO LTD), 27.Juni 1986,

## Beschreibung

Die Erfindung betrifft einen kartenförmigen Datenträger aus Kunststoff, der einen oder mehrere Chips aufnehmen kann, die in einer Aussparung montiert sind, die mit einem Deckel verschlossen wird. Der oder die Chips können beispielsweise in Nacktchipmontage auf sog. MID-Leiterbahnen aufgebracht werden, beispielsweise mit einer Kunststoffmasse vergossen werden und anschließend abgedeckelt werden, wobei der Deckel zumindest die Aussparung, aber in den meisten Fällen die gesamte flächige Seite abdeckt, die die Aussparung enthält. Unter MID - Technik ist die Ausbildung von dreidimensional verlaufenden Leiterbahnen zu verstehen, die auf einem dreidimensional strukturierten Substrat aufgebracht sind (Molded Interconnect Device/räumlicher spritzgegossener Schaltungsträger).

Datenträgerkarten werden häufig als Chipkarten bezeichnet, nachdem in der Regel ein Chip als Datenspeicher oder Datenprozessor enthalten ist. Dabei wird entweder ein Modul aus einer kleinen Leiterplatte mit einem darauf montierten Chip in einen Ausschnitt eines Grundkörpers einer Datenträgerkarte eingesetzt oder es wird ein auf einem Leiterrahmen (Leadframe) montierter Chip mit Kunststoff umspritzt oder es wird ein MID-Substrat in Kartenform verwendet, in das der Chip einmontiert, vergossen und anschließend abgedeckelt wird. Jede dieser Karten kann großflächig mit in irgendeiner Art gestalteten Etiketten versehen sein. Zur Datenübertragung nach außen hin oder in Richtung auf die Karte müssen lediglich Kontakte freigehalten werden. Andererseits ist auch eine kontaktlose Übertragung über Sende- und Empfangseinheiten prinzipiell möglich.

Derartige Karten können in Spritzgußverfahren mit einem Etikett versehen werden. So können beispielsweise verschiedene Chipkarten in einem Arbeitsgang mit Etiketten hergestellt werden. Beispielsweise werden in einer Spritzgießform Etiketten aus Kunststoff elektrostatisch gehalten und nach dem Einbringen eines aus Chip- und Leiterplatte bestehenden Modules mit elektrischen Anschlüssen kann die Kunststofform gespritzt werden, so daß Chipmodul, Anschlüsse und Etiketten zu einer Karte verbunden sind.

Derartige Karten nach dem Stand der Technik sind jedoch mit einer aufwendigen und teueren Montage verbunden. Bei dem auf ein Substrat vormontierten Chip ist das Einsetzen in die Karten ein umständlicher Vorgang. Das Umspritzen eines Leiterrahmens mit Kunststoff ist ebenfalls aufgrund der Handhabung des vormontierten Leiterrahmens in der Spritzgießmaschine anlagentechnisch sehr aufwendig. Dies insbesondere deshalb, weil der Chip zuvor in einem gesonderten Arbeitsschritt vor Beschädigung geschützt werden muß, beispielsweise durch Ummantelung mit einer Kunststoffmasse. Spritzgießverfahren sind also nicht nur durch die relativ hohe Temperaturbelastung für Halbleiterbausteine nachteilig, sondern sind auch mit sehr aufwendigen Anlagen verbunden. Der Spritzgießvorgang, der mit dem Ausrichten von zwei Etiketten und dem Modul innerhalb der Spritzform verbunden ist, ist sehr fehleranfällig. Wesentlich ist, daß dieser Schritt am Ende der Wertschöpfungskette bei bereits eingebautem Chip erfolgen muß. Bei einem Fehler im relativ kostengünstigen Kunststoffteil wird somit der teure Chip mit der gesamten Karte zu Ausschuß.

Eine Weiterentwicklung im Stand der Technik ist eine Datenträgerkarte mit einem MID-Kartenkörper. Darin wird der Chip fast am Ende der Wertschöpfungskette in den Kartengrundkörper eingesetzt. Anschließend wird auf der Seite, auf der der Chip in eine Aussparung eingesetzt wurde, ein Deckel aufgebracht. Die flächigen Seiten der Karte können durch Bedrucken oder Etikettieren fertiggestellt werden. Somit wird der Chip nicht mehr der Wärmebelastung eines Spritzgießverfahrens ausgesetzt.

Nachdem die genannten Datenträgerkarten bzw. Chipkarten in sehr großer Stückzahl hergestellt werden, beinhalten die bekannten Herstellungsverfahren weiterhin Nachteile. So sind dem Herstellungsverfahren mindestens Kartengrundkörper, Chip, Deckel und Etikett sowie Klebstoff zuzuführen.

In der JP-A-61-139 894 ist ein faltbarer Chip- und Kontaktträger beschrieben, der im gefalteten Zustand in eine Chipkarte eingesetzt werden kann. In der FR-A-2 595 847 ist eine Chipkarte beschrieben, die zum Schutz der Kontakte vor statischer Aufladung gefaltet werden kann. Beide Kartenhälften haben hier die gleiche Dicke.

In der EP-A-0 350 235 ist eine Datenträgerkarte beschrieben, die einstückig ausgeführt ist und aus einem Grundkörper und einem Deckel besteht, die über einen flexiblen Bereich schwenkbar verbunden sind. Deckel und Grundkörper sind, zum Verschließen der Aussparung, in der sich der Chip im geschlossenen Zustand befindet, verklebbar oder verschweißbar. Grundkörper und Deckel sind aus einer einzigen Platte mit Mittelnut gebildet, das heißt Deckel und Grundkörper sind gleich dick.

Der Erfindung liegt die Aufgabe zugrunde, eine einfach montierbare Datenträgerkarte anzugeben, die möglichst flach gestaltet ist.

Die Lösung dieser Aufgabe geschieht durch die Merkmale des Anspruchs 1.

Vorteilhafte Ausgestaltungen können den Unteransprüchen entnommen werden.

Der Erfindung liegt die Erkenntnis zugrunde, daß wesentliche logistische und verfahrenstechnische Vereinfachungen mit einem vorgefertigten einstückigen bzw. einteiligen Verbund aus Kartengrundkörper, Deckel und einer dazwischenliegenden zum Umklappen des Deckels verwendeten flexiblen Zone aus dem gleichen Material erzielbar sind. Somit kann die Datenträgerkarte, die eine Aussparung aufweist, mit einem oder mehreren Chips versehen werden und anschließend mit einem Deckel, der einstückig mit dem Kartengrundkörper ausgebildet ist, verschlossen werden, indem der Deckel über einen zwischenliegenden flexiblen Bereich wie über ein Scharnier umgeklappt und auf der flächigen Seite des Kartenkörpers auf der Aussparung befestigt wird.

Der vorgeschlagene einteilige Kartenkörper mit gleichzeitig daran ausgebildetem Deckel erspart gegenüber einem bisher in MID-Technik hergestellten Kartenkörper die Bereitstellung von zwei getrennten Teilen, dem Kartengrundkörper und dem Deckel. Somit wird die Bereitstellung und die Bereithaltung von Halb zeugen oder Zwischenprodukten vereinfacht und innerhalb der Montagelinie ergeben sich Vereinfachungen in der Handhabung, beispielsweise in Form von nicht mehr notwendigen Positionierungsvorgängen.

Der zum Umklappen und zum Abdeckeln der Chips in der Aussparung des Kartenkörpers vorgesehene Deckel kann im Spritzgießvorgang wie bereits beschrieben an dem Vorprodukt vorgesehen sein. Nachdem die Datenträgerkarten fast ausschließlich beschriftet oder in irgendeiner Art mit Etiketten versehen sind, kann das Scharnier zum Umklappen des Deckels auch aus einem Etikett bestehen. In diesem Fall würde das Etikett die der Aussparung des Kartenkörpers gegenüberliegende flächige Seite bedecken, seitwärts hervorragen, den flexiblen zum Umklappen des Deckels benötigten Bereich darstellen und außerdem den Deckel an sich tragen. Die Beabstandung zwischen Deckel und Kartenkörper entspricht ungefähr der Stärke des Kartengrundkörpers an seiner Schmalseite, so daß beim Umklappen über den flexiblen Bereich des Etiketts der Deckel genau auf der einen flächigen Seite des Kartenkörpers mit der Aussparung positioniert wird und verklebt werden kann und der flexible Bereich des Etiketts sich an die Schmalseite des Kartengrundkörpers anlegt.

Eine dritte Lösungsmöglichkeit wird dargestellt durch den Einsatz eines verstärkten Etikettes. Dieses bedeckt wiederum einseitig den Kartenkörper, ragt an der Schmalseite über den Kartenkörper hinaus, bildet einen flexiblen Bereich und im Anschluß daran den Deckel. Somit ist der Deckel im Halbzeug nicht separat auf das Etikett aufgebracht und wird mit diesem Etikett umgeklappt, sondern wird durch das Etikett selbst dargestellt, welches hierzu verstärkt ist. Diese Verstärkung ermöglicht trotzdem die Ausbildung eines flexiblen Bereiches, der sich beim Umklappen des Deckels an die Schmalseite des Kartenkörpers anlegt. Dabei ist denkbar, daß der flexible Bereich dünner ist als der Bereich des Etikettes, der den Dekkel darstellt.

Für die Herstellung eines erfindungsgemäßen Kartenkörpers, der einstückig oder einteilig mit einem dem Kartenkörper noch nicht verschließenden Deckel ausgebildet ist, werden in vorteilhafterweise Spritzgießverfahren eingesetzt.

Um innerhalb der Wertschöpfungskette den größten Schritt an das Ende der Verfahrenskette zu legen, können bereits am Zwischenprodukt oder Halbzeug Beschriftungen bzw. Etiketten mit ensprechender Graphik vorhanden sein. Somit erübrigt sich eine mit Wärmebelastung, chemischer Belastung und eventuell Druckbelastung verbundene Bedruckung nach der Montage und Abdeckelung des Chips. Nach der Abdeckelung der Karte ist diese dann versandfertig. Prinzipiell kann jedoch das Etikettieren oder das Bedrucken auch nach der Montage des Chips in die Aussparung des Kartenkörpers und dem Schließen des Deckels erfolgen.

Eine nach dem geschilderten Verfahren hergstellte Datenträgerkarte weist im fertigen abgedeckelten Zustand somit zwischen dem Deckel und der dem Deckel gegenüberliegenden Seite eine Verbindung auf, die an der entsprechenden Schmalseite der Datenträgerkarte bzw. des Kartengrundkörpers anliegt. Dies ist der flexible Bereich des Zwischenprodukts, der beim Umklappen des Deckels als Scharnier dient. Er wird entweder durch das gleiche Kunststoffmaterial dargestellt, wie der Kartenkörper und der Deckel und ist einstückig mit diesen beiden ausgebildet oder wird durch ein entsprechendes Etikett dargestellt.

Um möglichst preiswert einen fertigen Kartenkörper mit anhängendem Deckel für die Chipmontage bereitstellen zu können, kann dieser aus Kunststoff bestehende Körper mit einem während des Spritzgießvorgangs aufgebrachten bzw. in das Spritzgießwerkzeug eingebrachte Etikett versehen werden. Beim Spritzgießvorgang verbindet sich das Etikett mit dem Kartengrundkörper, der in einem anschließenden Vorgang mit dreidimensionial ausgebildeten Leiterbahnen versehen werden kann (In-Mold-Verfahren). Somit kann ein MID-Kartenkörper mit integrierter Beschriftung hergestellt und dem endgültigen Herstellungsverfahren der Datenträgerkarte zugeführt werden. Dies spart gegenüber dem Stand der Technik das nachträgliche Bedrucken bzw. Etikettieren zumindest auf einer Seite der Karte.

Im folgenden werden anhand von schematischen Figuren Ausführungsbeispiele beschrieben.
- Figur 1: zeigt eine abgedeckelte Datenträgerkarte, wobei der Chip und die Leiterbahnen gestrichelt dargestellt sind, da diese im fertigen Zustand größtenteils nicht sichtbar sind.
- Figur 2a: zeigt ein einstückig ausgebildetes Halbzeug vor der Chipmontage,
- Figur 2b: zeigt eine Datenträgerkarte mit montiertem Chip mit umgeklapptem verklebtem Deckel,
- Figur 3a: zeigt einen Verbund zwischen Kartenkörper und Deckel über ein Etikett als Halbzeug,
- Figur 3b: zeigt die Version entsprechend Figur 3a im fertig montierten und abgedeckelten Zustand,
- Figur 4a und 4b: zeigen jeweils das Halbzeug und eine fertige mit Chip bestückte Datenträgerkarte, wobei der Deckel durch das Etikett gebildet wird.

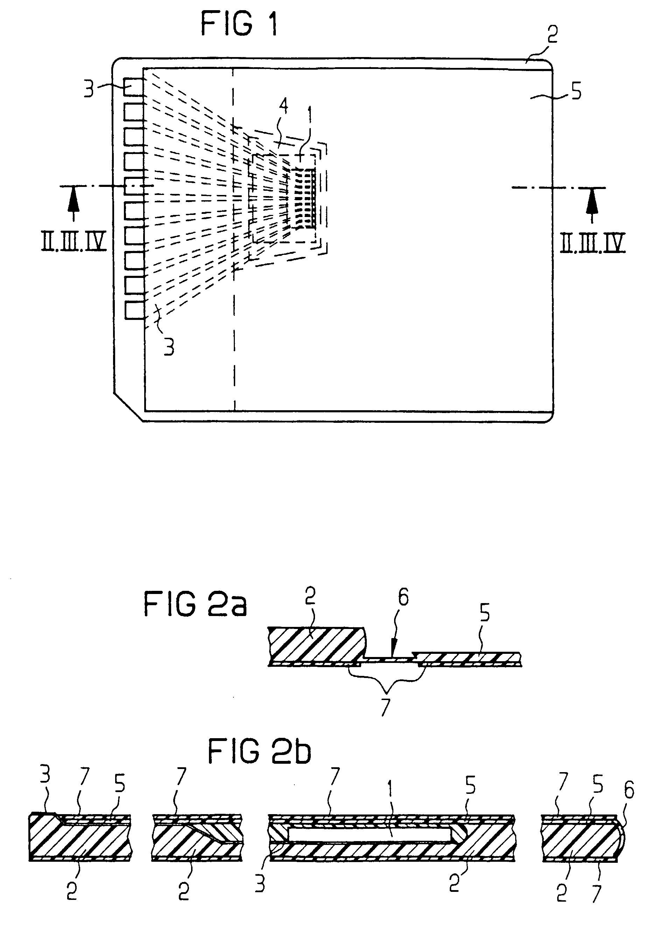

Die Figur 1 zeigt in der Draufsicht schematisch eine Datenträgerkarte mit einem Chip 1, der in einer Vertiefung 4 montiert ist. Die Leiterbahnen 3 sind in MID-Technologie dreidimensional auf den Oberflächen des Kartenkörpers ausgebildet worden. Der Kartenkörper 2 ist auf der Seite der Vertiefung 4 mit dem Deckel 5 abgedeckt worden. Der dreidimensionale Verlauf der Leiterbahnen 3, die galvanisch auf dem Kunststoffkartenkörper 2 aufgebracht worden sind, ist in den folgenden Figuren deutlicher erkennbar.

Die Figuren 2a und 2b stellen das Halbzeug oder Zwischenprodukt im aufgeklappten Zustand (2a) und im zugeklappten Zustand (Figur 2b) dar. Der Kartenkörper 2 ist hierbei einstükkig in einem Spritzgießvorgang mit dem Deckel 5 zugleich hergestellt worden, wobei der Deckel 5 von einer Schmalseite des Kartenkörpers 2 über einen flexiblen Bereich 6 beabstandet ist. Der flexible Bereich 6 dient als Scharnier und weist eine geringere Stärke auf, als der Deckel 5. Figur 2b zeigt im Schnitt den Verlauf der Leiterbahnen 3, wobei die dreidimensionale Ausbildung deutlich wird. Der Chip 1 ist in der Vertiefung 4 bzw. auf den Leiterbahnen 3 montiert und mit einer Kunststoffmasse abgedeckt worden. Darüber ist der Deckel 5 montiert, d.h. in der Regel aufgeklebt worden. Der flexible Bereich 6 liegt in diesem Zustand an der Schmalseite des Kartenkörpers 2 an und stellt weiterhin eine separate Verbindung zwischen Kartenkörper 2 und Deckel 5 dar.

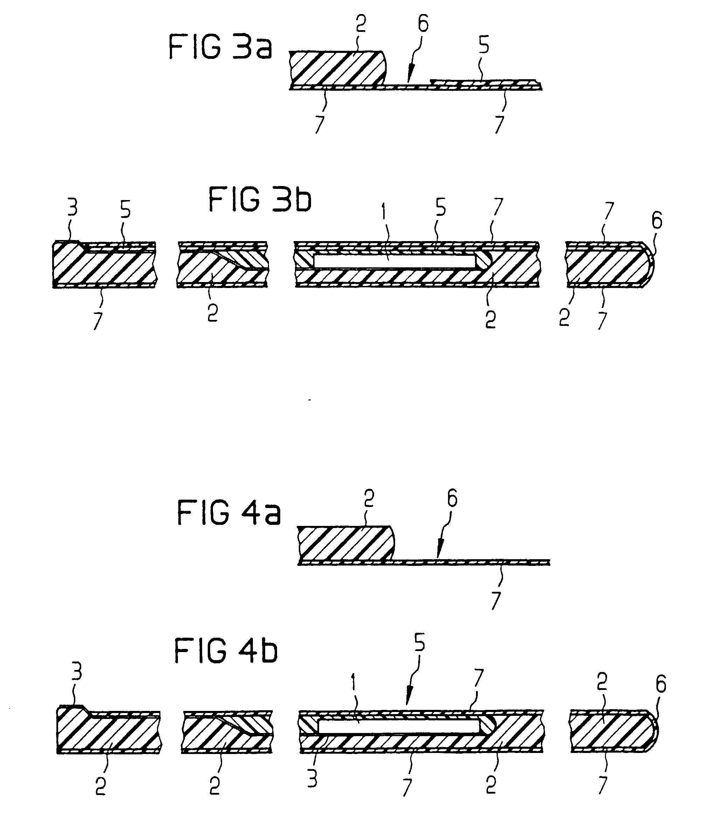

Die Figuren 3a und 3b zeigen zum einen den Zustand mit einem aufgeklappten Deckel und zum anderen den Zustand mit einem zugeklappten Deckel. In Figur 3a ist ein für die Endmontage bereitgestelltes Halbzeug oder Zwischenprodukt dargestellt, daß als einteiliges Stück ausgebildet ist. Darin ist ein Etikett 7 einerseits verbunden mit dem Kartenkörper 2 und andererseits mit dem Deckel 5. Die beiden letztgenannten Teile sind gegeneinander beabstandet. Der beabstandete Bereich wird - überbrückt durch einen Teil (in der Regel einen stegförmigen Teil), des Etikettes 7, der dazu dient, als flexibles Scharnier das Umklappen des Deckels 5 zu gewährleisten, so daß der Zustand entsprechend Figur 3b hergestellt werden kann. In Figur 3b sind wiederum der Chip 1, die Leiterbahnen 3, der Kartenkörper 2, das Etikett 7, sowie der flexible Bereich 6 dargestellt. Es ist zu erkennen, daß der Deckel 5 den wesentlichen Teil der oberen großflächigen Seite des Kartenkörpers 2, die die Vertiefung 4 aufweist, bedeckt. Lediglich am linken oberen Rand existiert ein Bereich, an dem die Endteile der Leiterbahnen 3 als Kontakte zur Datenübertragung nach außen geführt sind und freiliegen. Diese Kontakte können prinzipiell auch an den Schmalseiten des Kartenkörpers 2 ausgebildet sein oder beispielsweise eine U-förmige umgreifende Ausgestaltung aufweisen.

Die Figuren 4a und 4b zeigen eine andere Lösungsvariante der Erfindung. In diesem Fall ist das Etikett verstärkt ausgebildet, so daß kein separater Deckel aufzubringen ist. Der Dekkel 5 wird durch das Etikett 7 dargestellt. Die in Figur 4a im Schnitt dargestellte über den Rand des Kartenkörpers 2 hinausragende Länge des Etiketts 7 ist so dimensioniert, daß wiederum die Größe des Deckels 5 und der notwendige flexible Bereich 6 vorhanden sind. Nach dem Umklappen des den Deckel 5 darstellenden Etikettes 7 ist entsprechend Figur 4b die Datenträgerkarte bzw. die Vertiefung 4 mit dem Chip 1 abgedekkelt und der flexible Bereich 6 liegt an der Schmalseite des Kartenkörpers 2 an.

Mit dem sog. In-Mold-Verfahren lassen sich beispielsweise Etiketten mit einer Stärke von ca. 0,1 mm in einem Spritzgießverfahren auf Kunststoffkörper aufbringen. Die Verbindung der beiden Teile Kartenkörper 2 und Deckel 5 kann wie in Figuren dargestellt über ein filmartiges Scharnier, d.h. den flexiblen Bereich 6, dargestellt werden oder durch ein Etikett, daß beide großflächigen Seiten der Datenträgerkarte im wesentlichen abdeckt.

Der wesentliche Vorteil der Erfindung liegt darin, einen komplett vorbereiteten Kartenkörper 2 bereitzustellen, der einstückig oder einteilig mit dem Deckel verbunden ist. Sind bereits sämtliche Bedruckungen vorhanden, so ergeben sich weitere wesentliche Vorteile in der Endmontage. So muß lediglich der Chip montiert werden, und der Deckel verschlossen werden, so daß eine fertig montierte Datenträgerkarte bzw. Chipkarte vorliegt.

Ein Vorteil der Version entsprechend der Figuren 4a und 4b liegt darin, daß kein Spritzgießbereich für den Deckel bei der Herstellung des Halbzeuges erforderlich ist. Für die am Ende des gesamten Verfahrens entstehende Datenträgerkarte gilt, daß von der zur Verfügung stehenden Gesamtkartendicke dem Kartenkörper 2, der den Kartengrundkörper 3 darstellt, ein größerer Anteil zur Verfügung gestellt werden kann. Somit kann die Karte insgesamt steif ausgebildet werden. Andererseits kann bei geringerer Steifigkeitsanforderung die Karte dünner gestaltet werden. Da ober- und unterhalb des Chips sehr dünne Bereiche vorhanden sind, erleichtert und verbilligt die Version gemäß der Figuren 4a und 4b den Spritzguß. Bei dieser Ausführung wird vorzugsweise ein etwas dickeres Etikett verwendet, beispielsweise 0,2 mm stark, um im Bereich über den Chip eine ausreichende Stärke für die Schutzfunktion sichern zu stellen.

Die Befestigung des Deckels 5 auf dem Kartenkörper 2 kann beispielsweise auch durch Ultraschall- oder Laserschweißen geschehen. Falls ein Bedrucken nach der Chipmontage vorgesehen ist, bleiben die Oberflächen in der Regel weiß. Der meist stegförmige flexible Bereich 6 muß nicht über die gesamte Länge der Schmalseite des Kartenkörpers 2 durchgehend ausgebildet sein. Eine Version von mehreren Verbindungslaschen ist ebenfalls praktikabel. Dabei werden zwischen den Laschen Aussparungen plaziert. An diesen schmalseitig positionierten Aussparungen können beispielsweise Kontakte untergebracht werden.

## Patentansprüche

1. Datenträgerkarte
- mit einem Kartengrundkörper (2), mit einer Aussparung (4) zur Aufnahme wenigstens eines Chips (1),
- mit einem Deckel (5), mit dem die Aussparung (4) verschließbar ist, wobei
- der Deckel (5) mit dem Kartengrundkörper (2) über einen flexiblen Bereich (6) verbunden ist, und
- vor dem Schließen des Deckels (5) dieser mittels des flexiblen Bereiches (6) relativ zum Kartengrundkörper (2) schwenkbar ist,
**dadurch gekennzeichnet,** daß
der Deckel wesentlich dünner als der Grundkörper gestaltet ist.

2. Datenträgerkarte nach Anspruch 1
- wobei der flexible Bereich (6) und der Deckel (5) einstückig mit dem Kartengrundkörper (2) ausgebildet sind.

3. Datenträgerkarte nach Anspruch 2,
bei der der flexible Bereich (6), der Deckel (5) und der Kartengrundkörper (2) durch Spritzgießen hergestellt sind.

4. Datenträgerkarte nach Anspruch 1,
- bei der der flexible Bereich (6) Teil eines Etikettes (7) ist, das am Deckel (5) und an der von der Aussparung (4) abgewandten Seite des Kartengrundkörpers (2) befestigt ist.

5. Datenträgerkarte nach Anspruch 1,
- bei der der Deckel (5) und der flexible Bereich (6) einstückig durch ein Etikett (7) gebildet sind, welches an der der Aussparung (4) abgewandten Seite des Kartengrundkörpers (2) befestigt ist.

6. Datenträgerkarte nach einem der vorstehenden Ansprüche,
- bei der zum Verschließen der Aussparung (4) der Deckel (5) mit dem Kartengrundkörper (2) verklebbar oder verschweißbar ist.

## Claims

1. Data storage card
- having a card base body (2), having a cutout (4) for holding at least one chip (1),
- having a cover (5) by means of which the cutout (4) can be closed, in which case
- the cover (5) is connected to the card base body (2) via a flexible region (6), and
- before the cover (5) is closed, it can be pivoted by means of the flexible region (6) relative to the card base body (2),
characterized in that the cover is designed to be significantly thinner than the base body.

2. Data storage card according to Claim 1,
- in which the flexible region (6) and the cover (5) are formed integrally with the card base body (2).

3. Data storage card according to Claim 2,
- in which the flexible region (6), the cover (5) and the card base body (2) are produced by injection moulding.

4. Data storage card according to Claim 1,
- in which the flexible region (6) is part of a label (7) which is attached to the cover (5) and to the side of the card base body (2) facing away from the cutout (4).

5. Data storage card according to Claim 1,
- in which the cover (5) and the flexible region (6) are formed integrally by a label (7), which is attached to the side of the card base body (2) facing away from the cutout (4).

6. Data storage card according to one of the preceding claims,
- in which, in order to close the cutout (4), the cover (5) can be bonded or welded to the card base body (2).

## Revendications

1. Carte-support de données
- avec un corps de base de carte (2), avec un évidement (4) pour recevoir au moins une puce (1),
- avec un couvercle (5), avec lequel l'évidement (4) peut être fermé,
- le couvercle (5) étant relié au corps de base de la carte (2) par une zone souple (6) et
- le couvercle (5) pouvant être, avant sa fermeture, pivoté, grâce à la zone souple (6), par rapport au corps de base de la carte (2),
**caractérisé par le fait**
que le couvercle est nettement plus mince que le corps de base.

2. Carte-support de données selon la revendication 1,
la zone souple (6) et le couvercle (5) étant conçus en une seule pièce avec le corps de base de la carte (2).

3. Carte-support de données selon la revendication 2,
dans laquelle la zone souple (6), le couvercle (5) et le corps de base de la carte (2) sont fabriqués par moulage par injection.

4. Carte-support de données selon la revendication 1,
dans laquelle la zone souple (6) est une partie d'une étiquette qui est fixée au couvercle (5) et sur le côté du corps de base de la carte (2) opposé à l'évidement (4).

5. Carte-support de données selon la revendication 1,
dans laquelle le couvercle (5) et la zone souple (6) sont formés en une seule pièce par une étiquette (7) qui est fixée sur le côté du corps de base de la carte (2) opposé à l'évidement (4).

6. Carte-support de données selon l'une des revendications précédentes
dans laquelle, pour fermer l'évidement (4), le couvercle (5) peut être collé ou soudé au corps de base de la carte (2).
